# EUROPÄISCHE PATENTSCHRIFT

(11) **EP 2 300 680 B1**
(45) Veröffentlichungstag und Bekanntmachung des Hinweises auf die Patenterteilung: **17.02.2016**
(21) Anmeldenummer: 09745488.8
(22) Anmeldetag: 31.03.2009
(51) Int. Cl.: E06B 9/58, E05D 15/06, E05D 15/16, H02K 41/03, E05D 15/24, E05F 15/60

(54) **VERSCHLUSSEINRICHTUNG IN FORM EINES TORES**
CLOSING DEVICE IN THE FORM OF A DOOR
DISPOSITIF DE FERMETURE EN FORME DE PORTE

(30) Priorität: 15.05.2008 DE 102008023511
(43) Veröffentlichungstag der Anmeldung: 30.03.2011
(73) Patentinhaber: Efaflex Tor- und Sicherheitssysteme GmbH & Co. KG, 84079 Bruckberg (DE)
(72) Erfinder: BARTOLE, Dieter, 84091 Attenhofen (DE)
(74) Vertreter: Kuhnen & Wacker
(86) Internationale Anmeldenummer: PCT/EP2009/002347
(87) Internationale Veröffentlichungsnummer: WO 2009/138154

(56) Entgegenhaltungen:
- WO-A1-90/02056
- WO-A1-2006/032157
- DE-A1- 4 016 948
- JP-A- 8 275 493
- US-A- 3 346 993

## Beschreibung

Die Erfindung betrifft eine Verschlusseinrichtung in Form einer Tür oder eines Tores oder einer Schleuse oder einer Abdeckung oder dergleichen. Verschlusseinrichtungen dieser Art sind beispielsweise als Abschluss von Industriehallen und Industrieräumen, von Flugzeughallen, Feuerwehrfahrzeuggaragen, für Schleusen oder Abdeckungen an Öffnungen aller Art, in vielerlei Bauform anzutreffen, wobei die hier betrachteten Verschlusseinrichtungen vornehmlich einer Bauart sind, die mit einer Betätigungseinrichtung ausgerüstet sind, welche Antriebsmittel zum Bewegen eines Torblattes in Schließrichtung oder Öffnungsrichtung gegenüber einer Toröffnungsberandung und sich parallel zur Schließrichtung bzw. Öffnungsrichtung erstreckende Führungsmittel zum Führen mindestens eines Teiles des Torblattes in einer durch die Toröffnung bestimmten Fläche enthält.

Es sei hier angemerkt, dass im Zuge der vorliegenden Ausführungen das Verschlussorgan der Verschlusseinrichtung durchweg als Torblatt und die zu verschließende oder freizugebende Öffnung als Teil eines Gebäudes oder einer anderen Konstruktion durchweg als Toröffnung bezeichnet werden, wodurch jedoch eine besondere Art des Verschlussorganes oder eine besondere Art oder Orientierung der zu verschließenden oder freizugebenden Öffnung nicht festgelegt werden soll.

Eine bekannte Bauart von vertikal schließbaren bzw. öffenbaren, motorgetriebenen Rolltoren sieht ein Torblatt vor, das aus mittels Scharnieren mit quer zur Öffnungs- bzw. Schließrichtung orientierten Scharnierachsen verbundenen, brettartigen Torlammellen zusammengesetzt ist. Das Türblatt ist seitlich in Führungsschienen geführt, wobei sich die Lamellenenden über Rollen gegen die Führungsschienen abstützen, um die Reibung des Türblattes gegenüber den Führungsmitteln herabzusetzen.

Trotzdem entsteht beim Betrieb solcher motorbetätigter Tore ein erheblicher Reibungswiderstand, welcher vom Antrieb überwunden werden muss. Die Reibung des Türblattes in den Führungsmitteln verursacht erhebliche Geräusche. Die Abnutzung bedingt einen erhöhten Wartungsaufwand und führt außerdem zur Freisetzung von Feinstaub, dessen Quelle nicht nur an einander reibende Flächen zwischen Türblatt und Führungsmitteln sondern auch die mechanischen Verbindungselemente zwischen dem Torblatt und dem Antriebsmotor sind, wie Riemen, Ketten, Wellen, Lageranordnungen und dergleichen mehr.

Allgemein gilt für motorgetriebene Verschlusseinrichtungen der hier betrachteten Art in bekannter Bauweise, dass die bei der Betätigung der Verschlussorgane wirksam werdenden Reibungskräfte eine stärkere Auslegung der Antriebsmittel bedingen, was wiederum zu größerer Massenträgheit des gesamten Systems führt. Die Folge hiervon ist eine Beschränkung der möglichen Beschleunigungen und Verzögerung bei Bewegung des Verschlussorganes bzw. des Torblattes in Öffnungsrichtung bzw. Schließrichtung.

Allgemein ist das Prinzip der Magnetschwebetechnik bekannt, wobei mittels Elektromagnetelementgruppen, Permanentmagnetgruppen bzw. Linearmotoranordnungen die Reibung zwischen einem geführten Element und der entsprechenden Führung gemindert wird. Beispiele hierfür finden sich in den Dokumenten US 3,346,993, DE 40 16 948 A1, JP 8-275493 A und WO 2006/032157 A1.

Aus der WO 90/02056 A1 ist ferner eine Verschlusseinrichtung in Form eines Tores bekannt geworden. Diese weist eine Betätigungseinrichtung auf, welche Antriebsmittel zum Bewegen eines aus mittels Scharnieren mit quer zur Öffnungs- bzw. Schließrichtung orientierten Scharnierachsen verbundenen, brettartigen Torlamellen bestehenden Torblattes in Schließrichtung oder Öffnungsrichtung gegenüber einer Toröffnungsberandung, und sich parallel zur Schließrichtung bzw. Öffnungsrichtung erstreckende Führungsmittel zum Führen mindestens eines Teils des Torblattes in einer durch die Toröffnung bestimmten Fläche, insbesondere Ebene, enthält. Die vorliegende Erfindung geht von diesem Stand der Technik als nächstkommenden aus.

Aufgabe der Erfindung ist es, eine Verschlusseinrichtung in Form einer Tür oder eines Tores oder einer Schleuse oder einer Abdeckung oder dergleichen in der Weise auszubilden, dass die Reibung des Verschlussorganes bei seiner Bewegung gegenüber Führungsmitteln ganz bedeutend vermindert oder nahezu vermieden wird und eine entsprechende Verminderung der Geräuschentwicklung und des Verschleißes erreicht wird.

Diese Aufgabe wird erfindungsgemäß durch eine Verschlusseinrichtung mit den Merkmalen von Anspruch 1 gelöst.

Vorteilhafte Weiterbildungen und Ausgestaltungen einer solchen Verschlusseinrichtung sind Gegenstand der dem Anspruch 1 nachgeordneten Patentansprüche, deren Inhalt hierdurch ausdrücklich zum Bestandteil der Beschreibung gemacht wird, ohne an dieser Stelle den Wortlaut dieser Ansprüche zu wiederholen. Es sei ausdrücklich darauf hingewiesen, dass diese dem Anspruch 1 nachgeordneten Ansprüche teilweise auf Merkmale von selbständiger erfinderischer Bedeutung gerichtet sind, worauf auch noch im Zuge der Beschreibung von Ausführungsbeispielen nachfolgend eingegangen werden wird.

Einige Ausführungsbeispiele werden nun unter Bezugnahme auf die Zeichnung näher erläutert. Es zeigen:
- Fig. 1a bis 1g: schematische und in starker Vereinfachung perspektivisch wiedergegebene Darstellungen von Verschlusseinrichtungen der hier angegebenen Art in verschiedenen Positionen der Ebene einer Toröffnung, wobei die Fig. 1a, 1d und 1f keine erfindungsgemäßen Gegenstände zeigen, sondern lediglich das Verständnis der Erfindung erleichtern sollen;
- Fig. 2: eine ähnliche Darstellung wie Fig. 1c, jedoch in einer Abwandlung, bei welcher sich die seitlichen Führungsmittel in den Bereich eines Speicherraumes für das Torblatt hineinerstrecken;
- Fig. 3: eine perspektivische, teilweise im Schnitt gezeichnete, ausschnittsweise Ansicht eines vertikalen, horizontal bewegbaren Torblattes mit zugehörigen Führungsmitteln längs des oberen Randes und des unteren Randes dieses Türblattes, wobei diese Fig. keine erfindungsgemäße Verschlusseinrichtung zeigt, sondern ledigleich das Verständnis der Erfindung erleichtern soll;
- Fig. 4: eine perspektivische, ausschnittsweise Darstellung eines vertikalen, vertikal bewegbaren, aus Torlamellen gebildeten Torblattes in einem Zustand, in welchem es seitlich aus linksseitigen vertikalen Führungsmitteln herausgezogen wiedergegeben ist, um Einzelheiten des Torblattrandes und der Führungsmittel wiederzugeben;
- Fig. 5: einen horizontalen Schnitt durch einen Teil einer gegenüber Fig. 4 abgewandelten Ausführungsform;
- Fig. 6: eine schematische Seitenansicht einer Verschlusseinrichtung der in Fig. 4 allgemein wiedergegebenen Art in einer Ausfuhrungsform, bei der ein Teil der Führungsmittel als elektromagnetische Linearmotoranordung ausgebildet ist; und
- Fig. 7: eine ähnliche Darstellung von Fig. 6 von einer nochmals abgewandelten Ausführungsform der Verschlusseirnichtung.

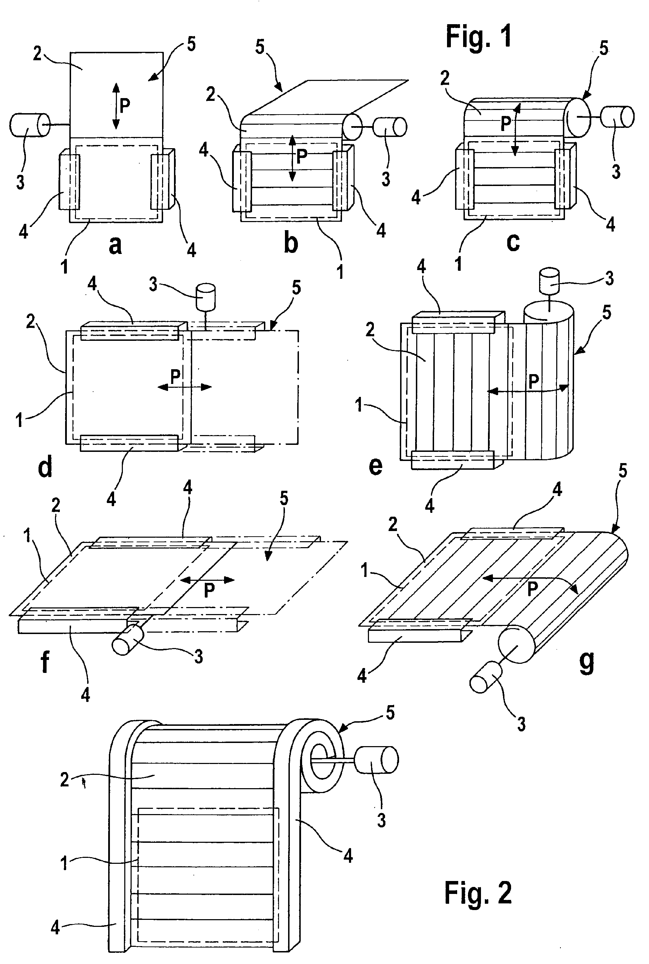

In den Fig. 1a bis 1g ist eine beispielsweise rechteckige Toröffnung in einem nicht dargestellten Gebäudeteil oder Konstruktionsteil, etwa einer Wand oder eines Gehäuses, durch eine in unterbrochener Linie gezeichnete Umgrenzung bei 1 angedeutet. Dieser Toröffnung 1 ist als Verschlussorgan ein mit 2 bezeichnetes Torblatt zugeordnet. Das Torblatt 2 ist durch einen Antriebsmotor 3, der in einer hier zunächst nicht interessierenden Weise mit dem Torblatt 2 gekoppelt ist, in Richtung des Doppelpfeiles P in Schließrichtung oder Öffnungsrichtung gegenüber der Toröffnung 1 bewegbar. Die in den Fig. 1a, 1d und 1f dargestellten Verschlusseinrichtungen sind dabei nicht erfindungsgemäß ausgestaltet.

Sich parallel zur Schließrichtung bzw. Öffnungsrichtung erstreckende Führungsmittel zum Führen des Torblattes 1 in einer durch die Toröffnung 1 bestimmten Fläche sind in den Fig. 1a bis 1g allgemein mit 4 bezeichnet. Diese Führungsmittel enthalten beispielsweise im Querschnitt etwa U-förmige, gehäusefeste, sich längs Rändern der Toröffnung 1 erstreckende und benachbarte Türblattränder umfassende Führungsteile, die mit den in besonderer Weise gestalteten, gegenüberliegenden Türblatträndern, die genannten Führungsmittel bilden.

Selbstverständlich kann der hier angegebene Gedanke auch dadurch verwirklicht werden, dass etwa die sich parallel zur Bewegungsrichtung erstreckenden Torblattränder im Queerschnitt U-förmig ausgebildet sind und in Zusammenhang mit in die solchermaßen gestalteten Torblattränder eingreifenden, gehäusefesten Führungsteilen die Führungsmittel 4 ausbilden.

Die Führungsmittel 4 haben gemäß der hier angegebenen Lösung die Gestalt von im wesentlichen berührungslos arbeitenden, das abzustützende und zu führende Bauteil in Gestalt des Torblattes 1 gleichsam schwimmend berührungslos lagernden magnetischen Längslagern, welche allerdings, wie weiter unten im Zusammenhang mit Fig. 2 ausgeführt werden wird, auch gekrümmte Bereiche einnehmen können.

Im Einzelnen ist zu den in den Fig. 1a bis 1g verdeutlichten Ausführungsformen einer Verschlusseinrichtung der hier angegebenen Art folgendes festzustellen:
Die Ausführungsform nach Fig. 1 enthält ein vertikal angeordnetes und mittels des Antriebsmotors 3 in vertikaler Richtung bewegbares starres Torblatt 2, das in der Schließstellung die Toröffnung 1 abdeckt und in der Öffnungsstellung von der Toröffnung 1 abgezogen und in einen Torblattspeicherbereich 5 hochgezogen wird. Die Ausführungsform nach Fig. 1b enthält ein aus quer verlaufenden Torlamellen zusammengesetztes Torblatt 2, welches durch den Antriebsmotor 3 zur Freigabe der vertikalen Toröffnung 1 vertikal hochgezogen, über eine Umlenkung geführt und in einen horizontalen Torblattspeicherbereich 5 geschoben wird.

Bei der Ausführungsform nach Fig. 1c erfolgt bei sonst gleicher Geometrie nach dem Hochziehen des Torblattes 2 durch den Antriebsmotor 3 ein Aufwickeln des aus Torlamellen zusammengesetzten Torblattes auf einen den Torblattspeicherbereich 5 bildenden Wickel, der sich oberhalb der Toröffnung 1 befindet.

Die Ausführungsform nach Fig. 1d betrifft ein zum Verschließen bzw. zur Freigabe einer in einer Vertikalebene gelegenen Toröffnung 1 dienendes plattenartiges, vertikales, horizontal bewegbares Torblatt 2, welches mittels des Antriebsmotors 3 von der Toröffnung 1 abziehbar und in den Torblattspeicherbereich 5 einschiebbar ist. Besonders bei dieser Ausführungsform wird deutlich, dass die Führungsmittel 4 sich zweckmäßig nicht allein längs der zur Torbewegungsrichtung parallelen Seitenränder der Toröffnung 1, sondern mindestens teilweise, vorzugsweise aber ganz in den Torblattspeicherbereich 5 hinein erstrecken, um die eingangs behandelten, angestrebten Ziele zu erreichen. Hierzu ist ersichtlich notwendig, dass das Torblatt 2 auf seinem gesamten Bewegungsweg zwischen der Schließstellung und der Öffnungsstellung durch die Führungsmittel 4 in einer Schwebestellung gehalten wird. Verlängerungen der Führungsmittel 4 von dem von der Toröffnung 1 bestimmten Bereich in den Torblattspeicherbereich 5 hinein sind in Fig. 1d durch strichpunktierte Linien angedeutet.

Die Ausführungsform nach Fig. 1e unterscheidet sich von derjenigen nach Fig. 1d dadurch, dass gemäß der Konstruktion nach Fig. 1e das Torblatt 2, welches hier aus über Scharniere verbundenen, sich vertikal erstreckenden Torlamellen zusammengesetzt ist, in dem Torblattspeicherbereich 5 durch den Antrieb 3 auf einen vertikalen, seitlich neben einer vertikalen Berandung der Toröffnung 1 installierten Wickel aufgewickelt wird.

Fig. 1f zeigt eine Situation, bei welcher das als starres Bauteil ausgebildete Torblatt 2 zur Abdeckung oder zum Verschluss bzw. zur Freigabe einer eine Horizontalebene aufspannenden Toröffnung 1 dient, wobei das Torblatt 1 durch den Antriebsmotor 3 zur Freigabe der Toröffnung in den neben der Toröffnung 1 gelegenen, ebenfalls eine Horizontalebene bestimmenden Torblattspeicherbereich 5 geschoben wird. Die Führungsmittel 4 verlaufen parallel zur Torblattverschiebungsrichtung längs der Seitenränder der Toröffnung 1 und sind wiederum, wie durch strichpunktierte Linien angedeutet, in den Torblattspeicherbereich 5 hinein verlängert, um das Torblatt 2 auf seinem gesamten Verschiebungsweg in einem Schwebezustand gegenüber den feststehenden Bauteilen der Verschlusseinrichtung zu halten.

Die in Fig. 1g gezeigte Abwandlung der Ausführungsform nach Fig. 1f sieht wiederum ein in horizontal orientierte Torlamellen unterteiltes Torblatt 2 vor, das mittels des Antriebsmotors 3 von der Toröffnung 1 abgezogen und auf einen Wickel aufgewickelt werden kann, der sich in dem Torblattspeicherbereich 5 befindet, der hier horizontal neben der Toröffnung 1 gelegen ist, wie aus Fig. 1g ohne weiteres ersichtlich ist.

Man erkennt ohne weiteres, dass bei Ausführungsformen der in Fig. 1f und Fig. 1g bezeichneten Art die Führungsmittel 4 längs der horizontal parallel zur Torblattverschiebugnsrichtung verlaufenden Ränder des Torblattes 2 bezüglich der Magnetfelderzeugungsmittel, die einander abstoßende Magnetpole erzeugen, asymmetrisch ausgebildet sein können, da die einerseits an Führungsholmen der Türöffnungsberandung und andererseits an diesen gegenüberliegenden oder mit ihnen in Eingriff stehenden Randbereichen des Torblattes befindlichen Magnetfelderzeugungsmittel nicht nur die im Betrieb erforderlichen Führungskräfte erzeugen, sondern auch das Gewicht des Torblattes zur Sicherstellung einer schwebenden Lagerung desselben aufnehmen müssen.

Fig. 2 zeigt in stark schematisierter Form, jedoch etwas mehr ins einzelne gehend, eine der Ausführungsform nach Fig. 1c ähnliche, abgewandelte Ausführungsform einer Verschlusseinrichtung der hier angegebenen Art mit einem aus horizontalen Torlamellen zusammengesetzten Torblatt 2, das von der in Fig. 2 gezeigten Schließstellung von der eine Vertikalebene aufspannenden Toröffnung 1 nach oben abgezogen und auf einen spiralförmigen Wickel mittels des Antriebsmotors 3 oder in anderer Weise aufgewickelt werden kann, wobei sich der Wickel in dem Torblattspeicherbereich 5 oberhalb der Toröffnung 1 befindet. Die an den seitlichen, vertikalen Führungsholmen der Toröffnungsberandung und längs der gegenüberliegenden Randbereiche des Torblattes 2 vorgesehenen Führungsmittel 4 setzen sich auf der Seite der Toröffnungsberandung von deren oberen Ende weg über den gesamten spiraligen Verlauf des oberen Torblattendes im Verlauf des Aufwickelns des Torblattes 2 auf den Wickel im Torblattspeicherbereich 5 fort, wie aus Fig. 2 ohne weiteres ersichtlich ist. Dies hat zur Folge, dass das Torblatt 2 nicht nur auf seinem Weg von der Schließstellung in die Öffnungsstellung über die Höhe der Toröffnung 1 in Schwebe oder im Zustand schwimmender Führung gehalten wird, sondern auch auf seinem gesamten Weg über den spiraligen Verlauf der Torblattränder im Torblattspeicherbereich 5. Der Antriebsmotor 3 kann daher das Torblatt 2 in einfacher Weise gegen einen minimalen Widerstand bewegen und kann somit verhältnismäßig klein dimensioniert werden. Auch andere Antriebsformen des Torblattes sind hierdurch ermöglicht, worauf weiter unten noch näher eingegangen wird.

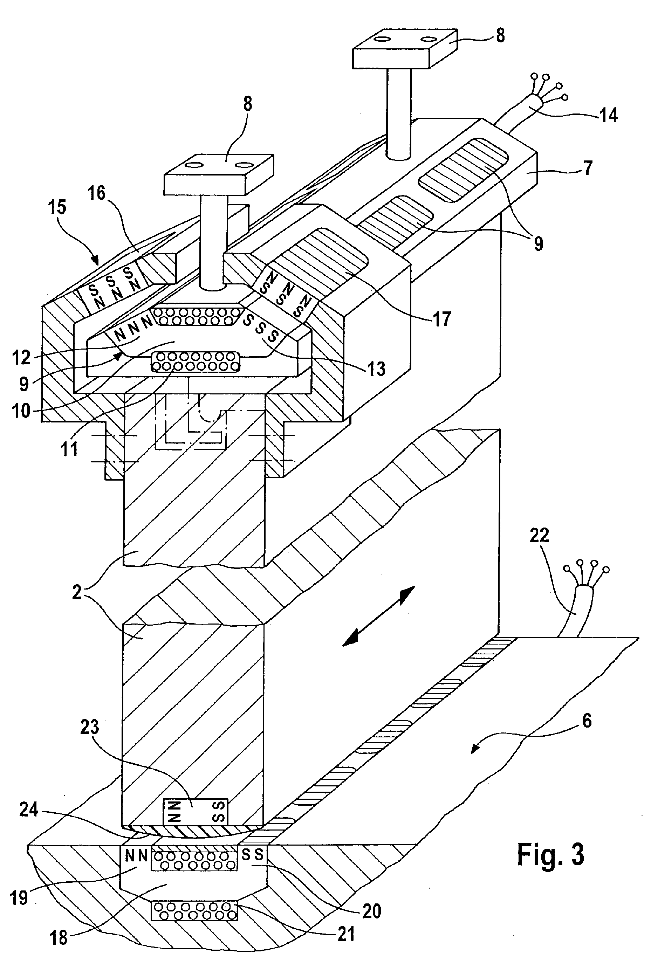

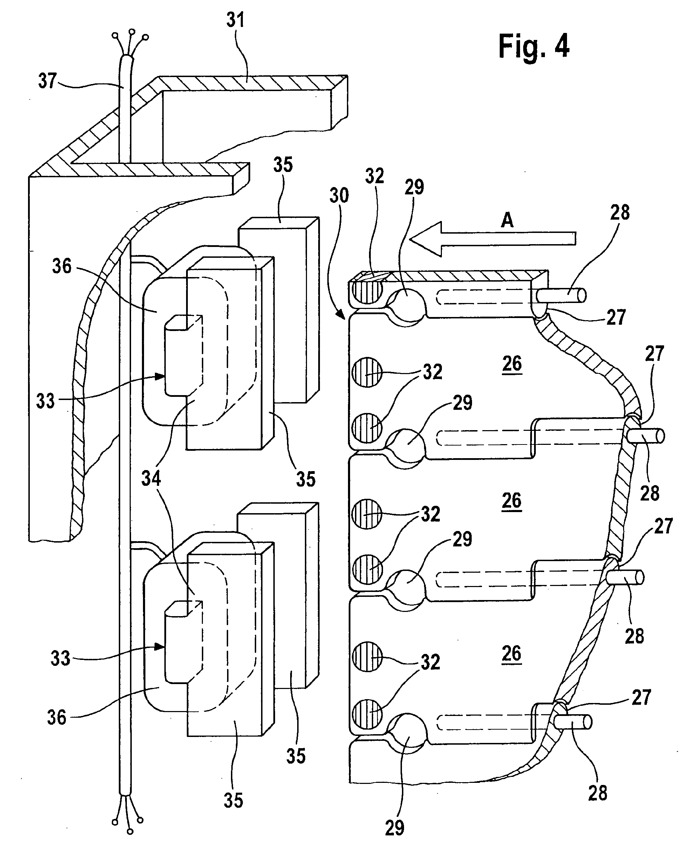

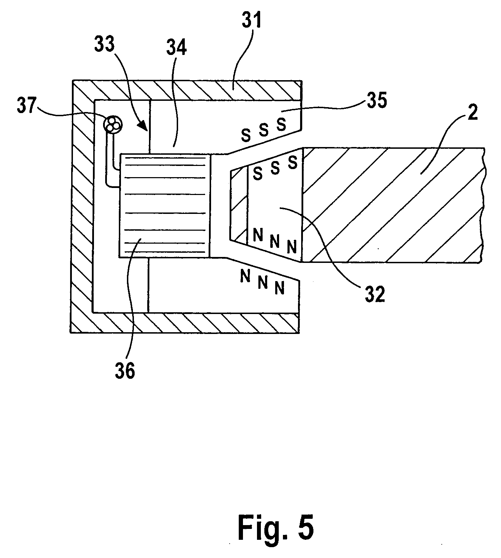

Beispielsweise Konstruktionen der Führungsmittel von einander abstoßende Magnetpole erzeugenden Magnetfelderzeugungsmitteln einerseits an Führungsholmen der Türöffnungsberandung und andererseits an diesen gegenüberliegenden oder mit ihnen in Eingriff stehenden Randbereichen des Torblattes seien nachfolgend anhand der Fig. 3 bis 5 erläutert, von denen Fig. 3 eine Ausführungsform einer Verschlusseinrichtung der hier angegebenen Art etwa gemäß den Prinzipien nach Fig. 1d betrifft, während die Fig. 4 und 5 Ausführungsformen von Verschlusseinrichtungen der hier angegebenen Art etwa gemäß den Prinzipien nach den Fig. 1b und 1c betreffen. Allerdings sei betont, dass es dem Fachmann durchaus gegeben ist, bestimmte, hier beschriebene Merkmale bestimmter Ausführungsformen auf andere, hier beschriebene Ausführungsformen zu übertragen, auch wenn solche anderen Ausführungsformen sich durch Torblattaufbau, Torblattbewegungsrichtung, Orientierung der von der Toröffnung aufgespannten Ebene und dergleichen unterscheiden.

In Fig. 3 ist ein vertikales, horizontal bewegbares Torblatt wiederum mit 2 bezeichnet. Es ist durch eine starre Platte gebildet, welche in Fig. 3 im Schnitt und in Teilen dargestellt und insofern nicht erfindungsgemäß ausgebildet ist. Während eine mit Bezug auf die Darstellung in Fig. 3 linke und rechte vertikale Türöffnungsumrandung in Fig.3 nicht wiedergegeben ist, bildet die untere Türöffnungsberandung einen Untergrund oder Boden 6 und die obere Türöffnungsberandung ein oberer, horizontal verlaufender Führungsholm 7. Der Führungsholm 7 ist durch Befestigungsanker 8 in einer dem Fachmann verständlichen Weise an einem Gebäudeteil verankert, wobei die Befestigungsanker 8 so dimensioniert sind, dass sie außer dem Gewicht des oberen, quer verlaufenden Führungsholms 7 auch das Gewicht des gesamten Türblattes 2 einschließlich etwaiger dynamischer Kräfte aufnehmen können.

Der Querschnitt des oberen, quer verlaufenden Führungsholms 7 ist, wie aus Fig. 3 zu erkennen ist, derjenige des Umrisses eines Rechtecks mit stark abgeschrägten oberen Ecken oder derjenige eines Hauses mit flachem Satteldach und abgeflachtem Giebelbereich.

Eingebettet in den oberen Führungsholm 7 sind sich in dessen Längsrichtung aneinander reihende, starke Elektromagneten 9, von denen einer in Fig. 3 im Schnitt dargestellt ist, während weitere Elektromagneten 9 sich in Führungsholmlängsrichtung anschließen und nur mit ihren Polflächen an den Schrägflächen des Führungsholms 7 beidseitig in Erscheinung treten.

Die Elektromagneten 9 enthalten einen Polkern 10 mit beidseitig von einer Erregerspule schräg nach aufwärts gerichteten Polschuhen 12 und 13, wobei die Polschuhe 12 und 13 die soeben erwähnten Polflächen an der Oberfläche der Schrägflächen des Führungsholms 7 darbieten.

Die Erregerspulen 11 der Elektromagneten 9 sind über ein längs des Führungsholms 7 innerhalb oder an demselben geführtes Kabel 14 gemeinsam oder für bestimmte Zwecke in gesteuerter Weise unterschiedlich mit einem Erreger-Gleichstrom beaufschlagbar.

An dem oberen Rand des Torblattes 2 sind mehrere, den Führungsholm 7 umgreifende, aus nicht magnetisierbarem Werkstoff gefertigte Trägermittel 15 befestigt, wobei eine solche Trägereinheit in Fig. 3 dargestellt ist. Die Trägermittel 15 sind bei der Ausführungsform nach Fig. 3 jeweils zweiteilig ausgeführt und haben etwa C-förmigen Querschnitt, wobei der Scheitel oder die Oberseite des Führungsholms 7 über eine in Torblattbewegungsrichtung verlaufende Profilöffnung zugänglich gehalten ist, so dass die Befestigungsanker 8 eine Vorbeibewegung der Trägermittel 15 bei Bewegung des Torblattes zulassen.

In die Trägerteile der Trägermittel 15 sind beidseitig Permanentmagnetstücke 16 und 17 eingebettet, welche so gepolt sind, dass bei Erregung der Elektromagneten 9 des Führungsholms 7 die sich an den Polschuhen 12 und 13 ausbildenden Magnetpole die jeweils gegenüber liegenden Magnetpole der Dauermagneten 16 und 17 abstoßen. Dies bewirkt, dass das Türblatt 2 bei Erregung der Elektromagneten 9 des oberen, quer verlaufenden Führungsholms 7 gegenüber der Toröffnungsberandung in die in Fig. 3 gezeigte Stellung angehoben und im Schwebezustand gehalten wird.

Die Schrägstellung der Polflächen der Polschuhe 12 und 13 der Elektromagneten 9 nach Art von Satteldachflächen in Zusammenwirkung mit einer entsprechenden Schrägstellung der gegenüberliegenden Polflächen der Permanentmagnetstücke 16 und 17 bewirkt, dass in diesem Schwebezustand des Türblattes 3 dieses außerdem eine Stabilisierung mit Bezug auf senkrecht zur Torblattebene wirkende Kräfte erfährt.

Zur Führung und Abstützung des unteren, quer verlaufenden Randes des Torblattes 2 kann eine ganz entsprechende Konstruktion vorgesehen werden, wie sie für die Führung und Abstützung des oberen Torblattrandes bisher in Zusammenhang mit der Ausführungsform von Fig. 3 beschrieben wurde. In diesem Falle ist der unteren, feststehenden Begrenzung ein unterer, quer verlaufender Führungsholm mit darin eingebetteten Elektromagneten in Entsprechung zu dem oberen Führungsholm 7 zuzuordnen und gegebenenfalls in den Boden 6 einzubetten. Gegen einen solchen unteren Führungsholm stützen sich dann am unteren Türblattrand befestigte Trägerfüße in Entsprechung mit der Ausbildung der Trägermittel 15 ab und werden bei Erregung der Elektromagneten des unteren Führungsholms von diesem abgehoben.

Eine derartige in Fig. 3 nicht gezeigte Konstruktion bedingt doch besondere Maßnahmen zur Vermeidung von Ungleichförmigkeiten in der Oberfläche des einer Verkehrsbelastung ausgesetzten Bodens. Die schräg verlaufenden Polflächen der in den Boden eingebetteten Elektromagnete in Entsprechung mit dem Verlauf der Polflächen der Polschuhe 12 und 13 im oberen, quer verlaufenden Führungsholm 7 müssen in diesem Falle durch keilartige, nicht magnetisierbare Abdeckleisten überdeckt werden, um eine in sich geschlossene ebene Bodenfläche des Bodens 6 auf der Bewegungsspur des Torblattes 2 sicherzustellen.

Eine vergleichsweise einfachere Konstruktion, welche in Fig. 3 gezeigt ist, ergibt sich dann, wenn in dem Boden 6 in Bewegungsrichtung des Torblattes 2 aufgereiht Elektromagneten 18 eingebettet werden, deren Polflächen der Polschuhe 19 und 20 mit der Oberfläche des Bodens 6 bündig sind oder jedenfalls bündig abgedeckt sind und in Horizontalflächen liegen. Die Erregerspulen 21 der Elektromagneten 18 sind über ein in den Boden 6 eingebettetes, parallel zum Weg des unteren Randes des Torblattes 2 verlaufendes Kabel 22 an eine Gleichstromquelle anschaltbar oder, entsprechend wie oben bereits für die oberen Führungsmittel angegeben, in bestimmter Weise gesteuert erregbar.

Zwischen den einander quer zur Bewegungsrichtung des Torblattes 2 gegenüber liegenden Polflächen der Elektromagneten 8 sind in den unteren Rand des Torblattes 2 in Torbewegungsrichtung nebeneinander liegend starke Permanentmagnetstücke 23 eingebettet, welche solche Polung haben, dass bei Erregung der Elektromagneten 18 in einer Richtung quer zur Torbewegungsrichtung nebeneinander liegende Paare von einander abstoßenden Magnetpolen entstehen, nämlich einmal das Magnetpolpaar an der Polfläche des Polschuhs 19 und der mit Bezug auf Fig. 3 linken Seite des Dauermagnetstückes 23 und zum anderen das Magnetpolpaar an der Polfläche des Polschuhs 20 und der mit Bezug auf Fig. 3 rechten Seite des Dauermagneten 23.

Die einander abstoßenden Magnetpolpaare am unteren Rand des Torblattes 2 unterstützen einmal beim Erregen der Elektromagneten 9 und 18 den Vorgang des Anhebens des Torblattes 2 in eine Schwebestellung und zum anderen bewirkt die Ausbildung der Magnetpolpaare am unteren Rand des Türblattes 2 eine Führung desselben mit Bezug auf Querkräfte senkrecht zur Ebene des Torblattes 2, auch nahe dessen unteren Randes gegenüber dem Boden 6.

Wird das Torblatt 2 durch Erregen der Elektromagnete 9 vertikal in einen Schwebezustand angehoben, so kann eine Dichtleiste 24, die an der nach unten weisenden Randfläche des Torblattes 2 angebracht ist, von der Oberfläche des Bodens 6 abgehoben werden und entwickelt bei der Verschiebung des Torblattes 2 keine Reibungskräfte gegenüber dem Boden 6. Werden die Elektromagneten der Führungsmittel wieder abgeschaltet, so fängt sie das Torblatt 2 mit seinem unteren Rand und insbesondere mit der Dichtenleiste 24 gegen den Untergrund 6 ab und bewirkt einen dichten Abschluss. Eine entsprechende, bei Erregung der Elektromagneten angehobene oder aufgehobene und bei Abschaltung der Elektromagneten wirksam werdende Dichtungskonstruktion kann auch längs des oberen Randes des Torblattes 2 in Zusammenwirkung mit der Unterseite des oberen, quer verlaufenden Trägerholms 7 vorgesehen sein, wie in Fig. 3 schematisch strickpunktiert bei 25 in einer für den Fachmann ohne weiteres verständlichen Weise angedeutet ist.

Eine weitere Ausbildung der Ausführungsform nach Fig. 3 kann vorsehen, dass an einem von einem Torblattspeicherbereich entfernten Vertikalholm der Toröffnungsberandung einerseits und an einer diesem Vertikalholm zugewandten seitlichen vertikalen Randfläche des Türblatts 2 Zuhaltungsfallen bzw. damit zusammenwirkende Zuhaltungshaken installiert sind, derart, dass beispielsweise beim Einschalten der Elektromagneten und vertikalem Anheben des Torblattes 2 hakenförmige Zuhaltungsorgane aus Zuhaltungsfallen freikommen und dann das Torblatt 2 in Öffnungsrichtung von der Toröffnung weg geschoben werden kann.

Dieses Wegschieben geschieht entweder durch einen in Fig. 3 nicht gezeigten gesonderten elektromotorischen oder pneumatischen oder hydraulischen oder in anderer Weise gestalteten Antrieb oder auch von Hand.

Der elektromotorische Antrieb für das Torblatt 2 kann gemäß einer bevorzugten Ausführungsform von einer elektromagnetischen Linearmotoranordnung gebildet sein, welche zwischen der zur Torblattverschiebungsrichtung parallelen Toröffnungsberandung und den jeweils gegenüberliegenden Ränder vorgesehen ist.

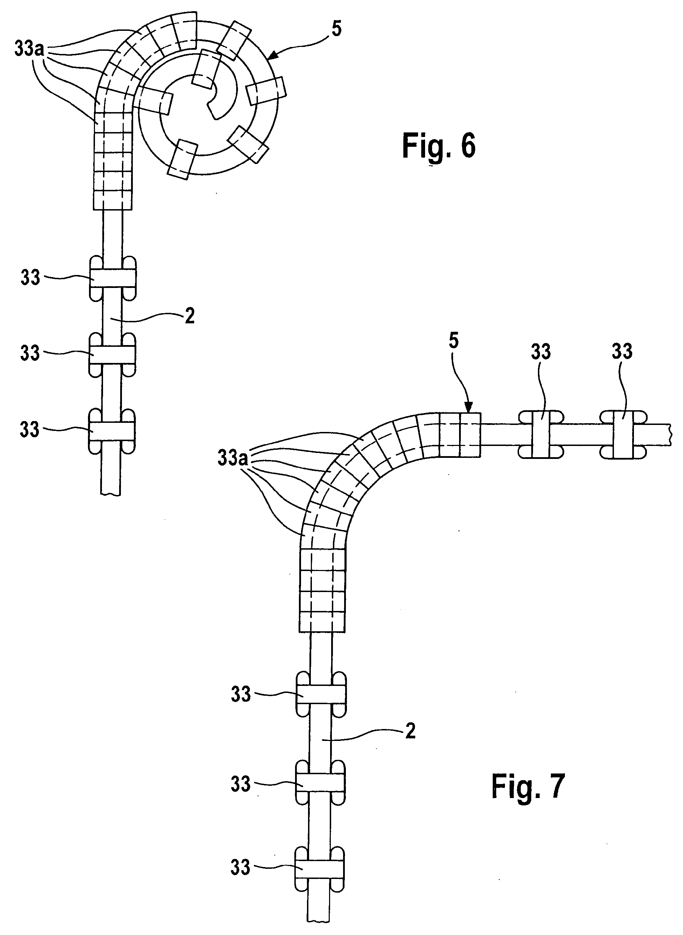

Die elektromagnetische Linearmotoranordnung kann gesondert von den Führungsmitteln 4 vorgesehen sein. Gemäß bevorzugter Ausführungsformen bilden jedoch die Führungsmittel 4 selbst in Verbindung mit einer entsprechenden Steuereinrichtung auf ihrer gesamten Länge oder auf einem Teil ihrer Länge auf dem Torverschiebungsweg die elektromagnetische Linearmotoranordnung. Dies wird bezüglich vertikal nach aufwärts und nach abwärts bewegter Torblätter weiter unten im Einzelnen unter Bezugnahme auf die Fig. 6 und 7 näher ausgeführt. Man erkennt aber, dass die Ausführungsform nach Fig. 3 ohne wesentliche Umgestaltung bei Verwendung geeigneter Steuergeräte zur Erregung der Elektromagneten 9 und auch 18 oder auch zur Erregung der Elektromagneten 9 allein die Verwendung der Führungsmittel auch als elektromagnetische Linearmotoranordnung zur Torbetätigung zulässt.

Verschlusseinrichtungen der hier angegebenen Art mit vertikal bewegten Torblättern, welche aus sich quer zur Torbewegungsrichtung erstreckende Torlamellen zusammengesetzt sind, etwa Verschlusseinrichtungen des allgemeinen Aufbaus gemäß den Ausführungsformen nach den Fig. 1b und 1c oder nach Fig. 2, und in bestimmter Abwandlung auch Verschlusseinrichtungen der allgemeinen Konstruktionen nach den Fig. 1e bis 1g, können Merkmale der Konstruktion der Führungsmittel haben, wie sie nachfolgend anhand der Fig. 4 und 5 beschrieben werden.

In Fig. 4 ist ein aus quer verlaufenden, brettartigen Torlamellen 26 mittels scharnierartiger Verbindungen 27 zusammengesetztes Torblatt wiederum mit 2 bezeichnet. Die Scharnierachsen 28, welche im allgemeinen aus Stahl, also aus einem magnetisierbarem Werkstoff bestehen, reichen bis zu Aussparungen 29 an einander gegenüberliegenden Rändern der Torlamellen 26, wobei die Aussparungen bestimmten Abstand von der seitlichen Berandung 30 des Türblattes 2 haben. Die Scharnierachsen 28 sind auf diese Weise außerhalb desjenigen Randbereiches des Türblattes 2 gehalten, welcher zusammen mit Magnetfelderzeugungsmitteln an einem seitlichen vertikalen Führungsholm 31 die Führungsmittel 4 der hier vorgeschlagenen Verschlusseinrichtung bildet.

Zur Darstellung von Fig. 4 ist zu bemerken, dass der gezeichnete linke Ausschnitt des Türblattes 2 aus dem linken vertikalen Führungsholm 31, welcher im Querschnitt U-förmige Gestalt hat, zur besseren Darstellbarkeit der Einzelheiten nach rechts quer zur Torblattbewegungsrichtung herausgezogen wiedergegeben ist und in die Funktionsstellung in Richtung des Pfeiles A in die Profilöffnung des Führungsholms 31 eingeschoben ist.

In die Torblattlamellen 26 sind nahe deren rechtem Ende und, wie in Fig. 4 gezeigt, nahe ihrem linken Ende Permanentmagnetstücke 32 eingebettet, welche eine solche Polung aufweisen, dass beispielsweise dem Betrachter zugekehrt die Permanentmagnetstücke 32 sämtlich Nordpole aufweisen, während auf der vom Betrachter abgekehrten Seite die Permanentmagnetstücke 32 ihren Südpol haben.

Bei der Anordnung der Permanentmagnetstücke 32 an den Enden der über Scharniere verbundenen Torblattlamellen ist von Wichtigkeit, dass sich jedenfalls Permanentmagnetstücke am seitlichen Torblattrand nahe den Knickstellen zwischen den Torblattlamellen 26 befinden, damit verhindert wird, dass die Torblattlamellen 26 innerhalb des Führungsspiels der Führungsmittel aus der Torblattebene heraus eine Verkantung erfahren. Bei bekannten Verschlusseinrichtungen der hier betrachteten Art, also bei lamellierten Rolltoren, sind zum Vermeiden des Verkantens der Torblattlamellen mit den seitlichen Führungsschienen oder Führungsholmen zusammenwirkende Rollen vorgesehen, die auch zur Führung des Torblattes bei dessen Bewegung wirksam werden. Solche Rollen können bei der hier angegebenen Verschlusseinrichtung entfallen oder können als Hilfsmittel für einen Notbetrieb vorgesehen sein oder können in ihrem Durchmesser und ihrer Anordnung so gewählt werden, dass sie dann, wenn die hier angegebenen magnetischen oder elektromagnetischen Führungsmittel während der Torbewegung wirksam sind, zuverlässig außer Eingriff mit den seitlichen Führungsholmen bleiben.

Zwischen die seitlichen Flanschen der Führungsholme 31 ist eine Gruppe starker Elektromagneten 33 eingeschoben und an den Führungsholmen 31 befestigt. Die Elektromagneten 33 haben mit Bezug auf einen Horizontalschnitt im wesentlichen U-förmige Polkerne 34 mit einander gegenüberstehenden, in Torbewegungsrichtung langgestreckten Polschuhen 35. Werden die Erregerwicklungen 36 der Elektromagneten 33 über ein längs der Führungsholme 31 geführtes Kabel 37 mit einem starken Gleichstrom beaufschlagt, so bilden sich an den Polschuhen 35 jeweils einerseits ein Nordpol und andererseits ein Südpol aus, welche den gegenüberstehenden Nordpol bzw. den jeweils gegenüberstehenden Südpol an den Polflächen der Permanentmagnetstücke 32 des Torblattes 2 abstoßen und den Torblattrand außer Berührung mit den Innenflächen der Polschuhe 35 der Elektromagneten 33 halten.

Entsprechend dem im oberen Teil von Fig. 3 gezeigten und im Zusammenhang mit dieser Zeichnungsdarstellung behandelten Konstruktionsgedanken können bei der Ausführungsform nach Fig. 4, wie in schematischer Darstellung in Fig. 5 gezeigt ist, die Elektromagneten 33 Polschuhe 35 aufweisen, deren Innenflächen von innen nach außen in der in Fig. 5 gezeigten Weise divergieren. In entsprechender Weise sind die gegenüberliegenden Polflächen der Permanentmagnetstücke 32 am Rand des Torblattes 2 schräg gestellt. Diese Anordnung bewirkt, dass die einander abstoßende Magnetpole erzeugenden Magnetfelderzeugungsmittel in Form der Permanentmagnetstücke 32 und der Elektromagneten 33 nicht nur eine Führung des Torblattes 2 mit Bezug auf Querkräfte senkrecht zur Torblattebene, sondern durch Zusammenwirkung der Führungsmittel auf der rechten und der linken Seite des Torblattes auch mit Bezug auf Kräfte parallel zur Torblattebene und quer zur Torbewegungsrichtung bewirken.

Die Fig. 6 und 7 zeigen Ausgestaltungen der im Zusammenhang mit den Fig. 4 und 5 beschriebenen Ausführungsform in vereinfachter Darstellung, bei welchen in einem Abschnitt der aus den Elektromagneten 33 und den Permanentmagnetstücken 32 gebildeten Führungsmittel die Elektromagneten in einer in Torblattbewegungsrichtung gedrängten, also nicht mit in Torblattbewegungsrichtung verlängerten Polschuhen 35 ausgestatteten Ausführungsform aneinandergereiht sind. Diese Gruppe von Elektromagneten 33a bildet zusammen mit der Reihenanordnung der Permanentmagnetstücke 32 längs des Randes des Torblattes 2 eine elektromagnetische Linearmotoranordnung, die sich längs des Torblattbewegungsweges von dem Toröffnungsbereich in den Torblattspeicherbereich 5 hinein erstreckt. Durch zeitveränderliche Ansteuerung der Erregung der Erregerwicklungen 36 der Elektromagnete 33a von einem entsprechend ausgebildeten Steuergerät aus, wird längs des von den Elektromagneten 33a eingenommenen Abschnittes des Torblattbewegungsweges ein magnetisches Wanderfeld erzeugt, das mit den Magnetpolen der Dauermagnetstücke 32 des Torblattrandes zusammenwirkt und auf diese Weise den Torantrieb bildet oder einen zusätzlich vorgesehenen Torantrieb unterstützt.

Bei der Ausführungsform nach den Fig. 6 und 7 können längs der seitlichen Führungsholme an der Toröffnungsberandung Detektorspulen vorgesehen sein, welche mit dem Magnetfeld der Permanentmagnetstücke 32 als Stellungsmelder zusammenwirken, deren Ausgangssignale verglichen werden, um eine Information darüber zu erhalten, ob beim Antrieb des Torblattes durch die elektromagnetische Linearmotoranordnung sich der rechte Torblattrand und der linke Torblattrand mit gleicher Geschwindigkeit bewegen. Bei Abweichungen können entsprechende Korrekturen der Erregung der Elektromagneten 33a auf der rechten Seite und der linken Seite des Torblattes vorgenommen werden.

Werden Verschlusseinrichtungen der hier angegebenen Art zum Abschluss von Reinraum-Fertigungsbereichen verwendet, in welchen gegenüber Magnetfeldern empfindliche Produkte behandelt oder gefertigt werden, so kann es zweckmäßig sein, gemäß einer in der Zeichnung nicht gezeigten Ausführungsform die Führungsmittel und/oder elektromagnetischen Linearmotoranordnungen, also die einander abstoßende Magnetpole erzeugenden Magnetfelderzeugungsmitteln einerseits an Führungsholmen der Türöffnungsberandung und andererseits an diesen gegenüberliegenden Randbereichen des Torblattes auf den gesamten Bewegungsweg des Torblattes durch ein Magnetfeldabschirmgehäuse zu umschließen, welches über einen Schlitz den Austritt des Torblattes bzw. der Torblattlamellen gestattet, die magnetisch aktiven Teile der Führungsmittel und/oder der elektromagnetischen Linearmotoranordnungen aber von der freien Umgebung magnetisch isoliert.

Schließlich sei noch angemerkt, dass den hier vorgeschlagenen Verschlusseinrichtungen, soweit sie als Teil der Führungsmittel oder als Teil der elektromagnetischen Linearmotoranordnungen Elektromagneten enthalten, zweckmäßig Notstromaggregate und/oder Notstrombatterien zugeordnet werden, um bei Ausfall des Stromversorgungsnetzes einen Notbetrieb zu ermöglichen.

Solche Notstromaggregate oder Notstrombatterien sind, soweit dies die Führungsmittel in Gestalt von einander abstoßende Magnetpole erzeugenden Magnetfelderzeugungsmitteln betrifft, dann nicht erforderlich, wenn diese Magnetfelderzeugungsmittel sämtlich von Paaren einander gegenüberstehender, einander abstoßender Dauermagnetstücke gebildet sind. Entsprechende Permanentstückreihenanordnungen können auf leistenförmigen Trägern montiert bereitgehalten werden und an den Führungsholmen der Türöffnungsberandung einerseits und an den gegenüberliegenden Randbereichen des Tores andererseits befestigt werden und zweckmäßig kann eine flexible Ausbildung der leistenförmigen Träger für die Permanentmagnetstücke vorgesehen sein.

## Patentansprüche

1. Verschlusseinrichtung in Form eines Tores, mit einer Betätigungseinrichtung, welche Antriebsmittel (3) zum Bewegen eines aus mittels Scharnieren (27) mit quer zur Öffnungs- bzw. Schließrichtung orientierten Scharnierachsen (28) verbundenen, brettartigen Torlamellen (26) bestehenden Torblattes (2) in Schließrichtung oder Öffnungsrichtung gegenüber einer Toröffnungsberandung (1), und sich parallel zur Schließrichtung bzw. Öffnungsrichtung erstreckende Führungsmittel (4) zum Führen mindestens eines Teils des Torblattes (2) in einer durch die Toröffnung (1) bestimmten Fläche, insbesondere Ebene, enthält,
**dadurch gekennzeichnet,**
**dass** die Führungsmittel (4) von einander abstoßende Magnetpole erzeugenden Magnetfelderzeugungsmitteln (9, 16, 17, 18, 23 bzw. 32, 33), einerseits an Führungsholmen (7, 6 bzw. 31) der Toröffnungsberandung und andererseits an diesen gegenüberliegenden oder mit ihnen in Eingriff stehenden Randbereichen des Torblattes (2), gebildet sind;
**dass** die Torlamellen (26) mindestens in dem mit dem Führungsholmen (31) der Toröffnungsberandung zusammenwirkenden Bereich aus nichtmagnetischem Werkstoff bestehen;
**dass** mindestens längs eines Teils der Länge der Führungsmittel in Richtung der Torblattverschiebung eine elektromagnetische Linearmotoranordnung aus Magnetfelderzeugungsmitteln in Gestalt von Elektromagnetelementgruppen oder in Gestalt von Elektromagnetelementgruppen und Dauerelementmagnetgruppen am Torblattrand einerseits und an der Toröffnungsberandung andererseits, als Torantrieb oder zur Unterstützung desselben vorgesehen ist; und
**dass** mindestens ein Abschnitt der Führungsmittel auch die elektromagnetische Linearmotoranordnung bildet.

2. Verschlusseinrichtung nach Anspruch 1, **dadurch gekennzeichnet, dass** die Torblattlamellen (26) an ihren den Führungsholmen (31) der Türöffnungsberandung benachbarten Enden mindestens nahe den geometrischen Scharnierachsen (28) mit Magnetfelderzeugungsmitteln in Gestalt von Permanentmagnetelementen (32) versehen sind, während die Magnetfelderzeugungsmittel auf der Seite der Führungsholme (31) von das Torblatt im Bereich der Torlamellenenden umgreifenden Elektromagneten (33) gebildet sind.

3. Verschlusseinrichtung Anspruchloder 2, **dadurch gekennzeichnet, dass** sich die Führungsmittel (4) in einem Torplatzspeicherbereich (5) hineinerstrecken, der außerhalb der Toröffnungsberandung liegt und dass die Magnetfelderzeugungsmittel auch in diesem Torblattspeicherbereich vorgesehen bzw. wirksam sind.

4. Verschlusseinrichtung nach einem der Ansprüche 1 bis 3, **dadurch gekennzeichnet, dass** die Ebene der Toröffnung (1) eine Vertikalebene ist.

5. Verschlusseinrichtung nach Anspruch 4, **dadurch gekennzeichnet, dass** die Schließ- bzw. Öffnungsrichtung vertikal orientiert ist.

6. Verschlusseinrichtung nach Anspruch 4, **dadurch gekennzeichnet, dass** die Schließ- bzw. Öffnungsrichtung horizontal orientiert ist.

7. Verschlusseinrichtung nach einem der Ansprüche 1 bis 3, **dadurch gekennzeichnet, dass** die die Toröffnung (1) bestimmende Fläche eine Horizontalebene oder eine hierzu im spitzen Winkel orientierte Ebene ist.

8. Verschlusseinrichtung nach einem der Ansprüche 1 bis 7, **dadurch gekennzeichnet, dass** am Torblattrand mit Führungsholmen der Toröffnungsberandung zusammenwirkende Hilfsführungsrollen vorgesehen sind.

9. Verschlusseinrichtung nach Anspruch 1, **dadurch gekennzeichnet, dass** an den Führungsholmen der Toröffnungsberandung die Stellung oder Geschwindigkeit des linken Torblattrandes und des rechten Torblattrandes detektierende Sensoren vorgesehen sind, mittels welchen zur Aufrechterhaltung eines geraden Laufes des Torblattes über elektronische Ansteuermittel die elektromagnetische Linearmotoranordnung steuerbar ist.

10. Verschlusseinrichtung nach einem der Ansprüche 1 bis 9, **dadurch gekennzeichnet, dass** die Führungsmittel und die Linearmotoranordnungvon einem Magnetfelder von der Umgebung isolierendem Abschirmgehäuse umschlossen sind.

11. Verschlusseinrichtung nach einem der Ansprüche 1 bis 10, **dadurch gekennzeichnet, dass** die einander abstoßende Magnetpole erzeugenden Magnetfelderzeugungsmittel einander gegenüber stehende Polflächen aufweisen, welche jeweils parallel zueinander derart gegenüber der Ebene des Torblattes (2) schräg gestellt sind, dass die erzeugten Abstoßungskräfte sowohl eine Komponente quer zur Torblattebene als auch eine Komponente parallel zur Torblattebene und quer zur Torverschiebungsrichtung aufweisen, derart, dass das Torblatt relativ zu Querkräften senkrecht zu seiner Hauptebene und auch relativ zu Kräften in der Torblattebene senkrecht zur Torbewegungsrichtung von den Führungsmitteln geführt ist.

## Claims

1. Closing device in the form of a door with an actuating device that comprises drive means (3) to move a door leaf (2) in the closing direction or opening direction by means of hinges (27) with hinge axes (28) that are orientated at a right angle to the opening or closing direction against a door opening surround (1), said door leaf consisting of combined board-shaped door panels (26), and guide means (4) running parallel to the closing direction or opening direction to guide at least a part of the door leaf (2) in a surface, in particular a plane, defined by the door opening (1),
**characterised in that**,
the guide means (4) are formed from magnetic field generating means (9, 16, 17, 18, 23 or 32, 33 respectively) that generate mutually repelling magnetic poles, on the one hand on guide bars (7, 6 or 31 respectively) of the door opening surround and on the other hand on peripheral areas of the door leaf (2) which lie opposite or which mesh with said bars;
the door panels (26), at least in the region that cooperates with the guide bars (31) of the door opening surround, consist of non-magnetic material;
as a door drive or in order to assist same, there is provided, at least along one part of the length of the guide means in the direction of the door leaf displacement, an electromagnetic linear motor structure made up of magnetic field generating means in the form of electromagnet element groups or in the form of electromagnet element groups and permanent element magnet groups on the edge of the door leaf on the one hand and on the door opening surround on the other hand; and
at least one section of the guide means also forms the electromagnetic linear motor structure.

2. Closing device according to claim 1, **characterised in that** the door leaf panels (26) are equipped on their ends adjacent to the guide bars (31) of the door opening surround, at least near to the geometrical hinge axes (28), with magnetic field generating means in the form of permanent magnet elements (32), whereas the magnetic field generating means on the side of the guide bars (31) are formed from electromagnets (33) encompassing the door leaf in the region of the door panel ends.

3. Closing device according to claim 1 or 2, **characterised in that** the guide means (4) extend into a door storage region (5) that is located outside the door opening surround and that the magnetic field generating means are also provided or are effective in this door storage region.

4. Closing device according to one of claims 1 to 3, **characterised in that** the plane of the door opening (1) is a vertical plane.

5. Closing device according to claim 4, **characterised in that** the direction of closing or of opening is vertically orientated.

6. Closing device according to claim 4, **characterised in that** the direction of closing or of opening is horizontally orientated.

7. Closing device according to one of claims 1 to 3, **characterised in that** the surface that defines the door opening (1) is a horizontal plane or a plane that is orientated at an acute angle thereto.

8. Closing device according to one of claims 1 to 7, **characterised in that** supplementary guide rollers are provided on the door leaf edge and cooperate with guide bars of the door opening surround.

9. Closing device according to claim 1, **characterised in that** sensors are provided on the guide bars of the door opening surround to detect the position or velocity of the left edge of the door leaf and the right edge of the door leaf, by means of which the electromagnetic linear motor structure can be controlled with electronic means of control in order to maintain an even course of the door leaf.

10. Closing device according to one of claims 1 to 9, **characterised in that** the guide means and the linear motor structure are enclosed by an insulating shielding housing from a magnetic field from the surroundings.

11. Closing device according to one of claims 1 to 10, **characterised in that** the magnetic field generating means that generate mutually repelling magnetic poles possess oppositely placed pole surfaces that are each placed obliquely parallel to one another opposite to the plane of the door leaf (2), such that the generated repelling forces have both a component that is transverse to the door leaf plane as well as transverse to the door displacement direction, such that the door leaf, relative to the transverse forces, is guided by the guide means perpendicularly to its main plane and also, relative to forces in the door leaf plane, perpendicularly to the door displacement direction.

## Revendications

1. Dispositif de fermeture en forme de porte, avec un dispositif d'actionnement qui contient des moyens d'entraînement (3) pour le déplacement d'un vantail de porte (2), composé de lamelles de porte (26) de type planche, reliées à l'aide de charnières (27) à des axes de charnière (28) orientés transversalement au sens d'ouverture ou de fermeture, dans le sens de fermeture ou d'ouverture par rapport à un bord d'ouverture de porte (1), et des moyens de guidage (4) s'étendant parallèlement au sens de fermeture ou d'ouverture pour le guidage d'au moins une partie du vantail de porte (2) dans une surface, en particulier un plan, déterminée par l'ouverture de porte (1),
**caractérisé en ce que**
les moyens de guidage (4) sont formés par des moyens de génération de champs magnétiques (9, 16, 17, 18, 23 ou 32, 33) générant des pôles magnétiques se repoussant, d'une part sur des longerons de guidage (7, 6 ou 31) du bord d'ouverture de porte et d'autre part sur des zones de bord en face de ceux-ci ou en engagement avec eux du vantail de porte (2) ;
les lamelles de porte (26) se composent d'un matériau non magnétique au moins dans la zone coopérant avec le longeron de guidage (31) du bord d'ouverture de porte :
au moins le long d'une partie de la longueur des moyens de guidage en direction du déplacement de vantail de porte, un agencement de moteur linéaire électromagnétique composé de moyens de génération de champs magnétiques sous la forme de groupes d'éléments électromagnétiques ou sous la forme de groupes d'éléments électromagnétiques et de groupes magnétiques à pile permanente sur le bord du vantail de porte d'une part et sur le bord d'ouverture de porte d'autre part, est prévu comme entraînement de porte ou pour l'appui de celui-ci ; et
au moins une section des moyens de guidage forme aussi l'agencement de moteur linéaire électromagnétique.

2. Dispositif de fermeture selon la revendication 1, **caractérisé en ce que** les lamelles de vantail de porte (26) sont pourvues, sur leurs extrémités contiguës aux longerons de guidage (31) du bord d'ouverture de porte au moins près des axes de charnière géométriques (28), de moyens de génération de champs magnétiques sous la forme d'éléments magnétiques permanents (32) alors que les moyens de génération de champs magnétiques sont formés, sur le côté des longerons de guidage (31), par le vantail de porte dans la zone des électroaimants (33) entourant des extrémités de lamelle de porte.

3. Dispositif de fermeture selon la revendication 1 ou 2, **caractérisé en ce que** les moyens de guidage (4) s'étendent dans une zone d'accumulation d'emplacement de porte (5) qui se trouve en dehors du bord d'ouverture de porte et les moyens de génération de champs magnétiques sont prévus ou actifs aussi dans cette zone d'accumulation de vantail de porte.

4. Dispositif de fermeture selon l'une quelconque des revendications 1 à 3, **caractérisé en ce que** le plan de l'ouverture de porte (1) est un plan vertical.

5. Dispositif de fermeture selon la revendication 4, **caractérisé en ce que** le sens de fermeture ou d'ouverture est orienté verticalement.

6. Dispositif de fermeture selon la revendication 4, **caractérisé en ce que** le sens de fermeture ou d'ouverture est orienté horizontalement.

7. Dispositif de fermeture selon l'une quelconque des revendications 1 à 3, **caractérisé en ce que** la surface déterminant l'ouverture de porte (1) est un plan horizontal ou un plan orienté à angle aigu par rapport à celui-ci.

8. Dispositif de fermeture selon l'une quelconque des revendications 1 à 7, **caractérisé en ce que** des rouleaux de guidage auxiliaires coagissant avec des longerons de guidage du bord d'ouverture de porte sont prévus sur le bord de vantail de porte.

9. Dispositif de fermeture selon la revendication 1, **caractérisé en ce que** des capteurs détectant la position ou la vitesse du bord de vantail de porte gauche et du bord de vantail de porte droit sont prévus sur les longerons de guidage du bord d'ouverture de porte, à l'aide desquels l'agencement de moteur linéaire électromagnétique peut être commandé pour le maintien d'une course rectiligne du vantail de porte par des moyens de commande électroniques.

10. Dispositif de fermeture selon l'une quelconque des revendications 1 à 9, **caractérisé en ce que** les moyens de guidage et l'agencement de moteur linéaire sont entourés par un boîtier blindé isolant des champs magnétiques par rapport à l'environnement.

11. Dispositif de fermeture selon l'une quelconque des revendications 1 à 10, **caractérisé en ce que** les moyens de génération de champs magnétiques générant des pôles magnétiques se repoussant présentent des surfaces de pôle se trouvant en face l'une de l'autre qui sont en biais respectivement parallèlement l'une à l'autre par rapport au plan du vantail de porte (2) de telle manière que les forces de répulsion générées présentent non seulement une composante transversalement au plan de vantail de porte mais aussi une composante parallèle au plan de vantail de porte et transversalement au sens de déplacement de porte de telle manière que le vantail de porte soit guidé par les moyens de guidage par rapport aux forces transversales perpendiculairement à son plan principal et aussi par rapport aux forces dans le plan de vantail de porte perpendiculairement au sens de déplacement de porte.
